# EUROPÄISCHE PATENTSCHRIFT

(11) **EP 1 495 215 B1**
(45) Veröffentlichungstag und Bekanntmachung des Hinweises auf die Patenterteilung: **29.03.2006**
(21) Anmeldenummer: 03720491.4
(22) Anmeldetag: 17.04.2003
(51) Int. Cl.: F01N 3/28, B01J 35/04

(54) **KALIBRIERTER KATALYSATOR-TRÄGERKÖRPER MIT WELLMANTEL UND VERFAHREN ZU DESSEN HERSTELLUNG**
CALIBRATED CATALYST CARRIER ELEMENT COMPRISING A CORRUGATED SHEATH AND METHOD FOR THE PRODUCTION THEREOF
CORPS SUPPORT CATALYSEUR CALIBRE ET DOTE D'UNE ENVELOPPE ONDULEE ET SON PROCEDE DE PRODUCTION

(30) Priorität: 18.04.2002 DE 10217260; 26.04.2002 DE 10218856
(43) Veröffentlichungstag der Anmeldung: 12.01.2005
(73) Patentinhaber: Emitec Gesellschaft für Emissionstechnologie mbH, 53797 Lohmar (DE)
(72) Erfinder: KURTH, Ferdi, 53894 Mechernich (DE); SCHMIDT, Udo, 53819 Neunkirchen (DE)
(74) Vertreter: Rössler, Matthias
(86) Internationale Anmeldenummer: PCT/EP2003/004047
(87) Internationale Veröffentlichungsnummer: WO 2003/087549

(56) Entgegenhaltungen:
- EP-A- 0 245 737
- WO-A-90/03220
- DE-A- 3 833 675
- DE-C- 3 743 723
- PATENT ABSTRACTS OF JAPAN vol. 016, no. 572 (C-1010), 11. Dezember 1992 (1992-12-11) & JP 04 222636 A (TOYOTA MOTOR CORP;OTHERS: 01), 12. August 1992 (1992-08-12) in der Anmeldung erwähnt

## Beschreibung

Die vorliegende Erfindung betrifft einen Katalysator-Trägerkörper gemäß dem Oberbegriff des Anspruchs 18 sowie ein Verfahren zu dessen Herstellung. Derartige Katalysator-Trägerkörper werden insbesondere zur Reduzierung des Schadstoffanteils von Abgasen mobiler Verbrennungskraftmaschinen eingesetzt.

Katalysator-Trägerkörper werden in Abgassystemen mobiler Verbrennungskraftmaschinen (z.B. Diesel- oder Otto-Motoren) eingesetzt. Hierzu werden die Katalysator-Trägerkörper üblicherweise mit einer Trägerschicht (insbesondere Wash-Coat) versehen, welche sich durch eine sehr große Oberfläche auszeichnet und üblicherweise mit mindestens einem katalytisch aktiven Material (z.B. Platin, Rodium oder dergleichen) imprägniert ist. Beim Kontakt des Abgases mit diesen katalytisch aktiven Materialien erfolgt eine Reduzierung der im Abgas enthaltenen Schadstoffe, wie beispielsweise Kohlenmonoxid, ungesättigte Kohlenwasserstoffe, Stickstoffmonoxid. Um bereits eine relativ große Oberfläche für die Trägerschicht bereitstellen zu können, werden die Katalysator-Trägerkörper üblicherweise als Wabenkörper ausgeführt, welche eine Vielzahl für ein Fluid durchströmbare Kanäle aufweisen. Hierbei sind keramische, extrudierte und metallische Wabenkörper bekannt. Die Wabenkörper werden im Allgemeinen in ein Gehäuse eingebracht, welches wiederum direkt in die Abgasleitung integriert wird. In einer solchen mobilen Abgasanlage ist der Katalysator-Trägerkörper hohen thermischen und dynamischen Belastungen ausgesetzt.

Die thermischen Belastungen resultieren beispielsweise einerseits aus der Temperatur des Abgases selbst, wobei diese zunimmt, wenn der Katalysator-Trägerkörper näher an die Verbrennungskraftmaschine angeordnet wird Andererseits führen auch die chemische, katalytische Umsetzung zu einer Temperaturerhöhung des Katalysator-Trägerkörpers, da diese im Allgemeinen exotherm abläuft, so dass unter Umständen Temperaturen erreicht werden, die deutlich höher als die Abgastemperatur selbst ist. Die wesentlichen Faktoren im Hinblick auf die dynamischen Belastungen resultieren aus dem Verbrennungsprozess sowie externen Schwingungsanregungen. Da der Verbrennungsprozess in der Verbrennungskraftmaschinen intermittierend erfolgt, setzen sich die hieraus resultierenden Druckstöße periodisch durch das Abgassystem fort. Externe Schwingungsanregung erfolgt beispielsweise aufgrund von Fahrbahn-Unebenheiten, über welche sich das Automobil bewegt Aufgrund dieser hohen thermischen und dynamischen Belastung ist eine dauerhafte Verbindung des Wabenkörpers mit dem Gehäuse von besonderem Interesse. Diese Verbindung muss einerseits geeignet sein, unterschiedliches thermisches Ausdehnungsverhalten des Wabenkörpers gegenüber dem Gehäuse zu kompensieren, andererseits muss ein Ablösen des Wabenkörpers vom Gehäuse langfristig vermieden werden.

Gerade im Hinblick auf die Verwendung metallischer Wabenkörper und einer dauerhaften Anbindung an ein metallisches Gehäuse ist es bekannt, die Verbindung des Wabenkörpers mit dem Gehäuse über eine Zwischenlage auszuführen, die auf ihrer Innenseite mit dem Wabenkörper und auf ihrer Außenseite mit dem Gehäuse verbunden ist. Eine solche Zwischenlage geht beispielsweise aus der japanischen Veröffentlichung JP 04-222636 A hervor. Die Zwischenlage ist dort als Wellblech ausgeführt und einerseits mit dem Wabenkörper sowie andererseits mit dem Gehäuse verbunden. Dabei wird ausgeführt, dass sich dieses Wellblech bei einer radialen Expansion des Wabenkörpers deformieren kann. Zur Gewährleistung einer solchen Deformation wird dort vorgeschlagen, dass eine Verbindung des Wellbleches hin zum Wabenkörper nicht in demselben Querschnitt anzuordnen ist, wie eine Verbindung hin zum Gehäuse. Unter diesen Umständen sei auch eine Expansion bzw. Kontraktion in axialer Richtung des Wabenkörpers gewährleistet. Der dort beschriebene Wabenkörper besteht aus einem glatten und einem gewellten Blech, welche spiralig zu einem zylindrischen Wabenkörper zusammen gerollt sind. Dabei stellt die äußere Begrenzung des Wabenkörpers ein glattes Blech dar. Unter dieser Voraussetzung ist eine Anbindung des zur Anbindung am Gehäuse dienenden Wellblech relativ unproblematisch, da eine nahezu glatte Oberfläche des Wabenkörpers bereitgestellt wird.

Ein solcher spiralförmiger Aufbau des Wabenkörpers hat jedoch im Hinblick auf die Fertigung bzw. das Langzeitverhalten einige Nachteile. Beim Herstellungsverfahren gestaltet es sich schwierig, die einzelnen Lagen mit einer gleichmäßigen Vorspannung zu versehen, so dass ein inniger Kontakt der benachbarten Blechlagen zueinander nicht sicher gestellt werden kann. Dies führt beispielsweise dazu, dass derartige Wabenkörper bei einer lang andauernden thermischen und dynamischen Belastung zum so genannten "Teleskopieren" neigen. Damit ist gemeint, dass sich die Lagen zueinander nach einer gewissen Einsatzdauer verschieben. Dies führt zu einem inhomogenen Aufbau, der letztendlich auch das Versagen des Bauteiles zur Folge haben kann.

Aus diesem Grund wurden bereits frühzeitig andere Anordnungsformen der Blechfolien gewählt. Diese umfassen insbesondere Wabenkörper, welche aus einer Vielzahl von glatten und gewellten Metallfolien gebildet werden, die S-förmig und/oder U-förmig gebogen sind. Zur näheren Beschreibung derartiger metallischer Wabenkörper sei insbesondere auf die EP 0 245 737, WO 90/03220 sowie DE 3743723 verwiesen. Bei derartigen Ausgestaltungen des Wabenkörpers wird dieser aber nicht von einer glatten Lage begrenzt, vielmehr sind am Umfang des Wabenkörpers eine Vielzahl freier Enden der glatten und gewellten Blechlagen angeordnet.

Hiervon ausgehend ist es Aufgabe der Erfindung, ein Verfahren zur Herstellung eines Katalysator-Trägerkörpers anzugeben, wobei eine dauerhafte fügetechnische Verbindung des Wabenkörpers mit einem zwischen dem Gehäuse und dem Wabenkörper angeordneten Wellmantel gewährleistet ist. Dabei steht insbesondere eine dauerhafte Anbindung der freien Enden der einzelnen Lagen des Wabenkörpers mit dem Wellmantel im Vordergrund. Zusätzlich soll das Verfahren eine einfache Durchführbarkeit im Rahmen einer Serienfertigung sicherstellen. Außerdem soll ein Katalysator-Trägerkörper angegeben werden, der eine stabile Anbindung des Wabenkörpers an dem Wellmantel auch unter hohen thermischen und dynamischen Belastungen gewährleistet.

Diese Aufgaben werden gelöst durch ein Verfahren zur Herstellung eines Katalysator-Trägerkörpers mit den Merkmalen des Patentanspruchs 1 sowie einem Katalysator-Trägerkörper mit den Merkmalen des Anspruchs 18. Weitere vorteilhafte Ausgestaltungen des Verfahrens bzw. des Katalysator-Trägerkörpers sind in den jeweils abhängigen Patentansprüchen beschrieben. Die Merkmale der einzelnen Unteransprüche sind dabei beliebig miteinander kombinierbar.

Das Verfahren dient somit zur Herstellung eines Katalysator-Trägerkörpers, der einen Wabenkörper umfasst, welcher zumindest teilweise strukturierte Lagen hat, welche für ein Fluid durchströmbare Kanäle bilden. Weiter umfasst der Katalysator-Trägerkörper ein Gehäuse, welches den Wabenkörper zumindest teilweise umgibt, sowie mindestens einen Wellmantel, der zwischen dem Wabenkörper und dem Gehäuse angeordnet ist und den Wabenkörper mit dem Gehäuse verbindet Das Verfahren weist folgende Schritte auf:
- Herstellen des Wabenkörpers, wobei dieser eine äußere Ausdehnung hat, die zumindest teilweise durch Enden der Lagen gebildet ist;
- Herstellen des mindestens einen Wellmantels mit einem Profil;
- Herstellen eines Gehäuses mit einer Innenkontur;
- Einfügen des Wabenkörpers in den mindestens einen Wellmantel;
- Einfügen des mindestens einen Wellmantels mit dem Wabenkörper in das Gehäuse;
- Kalibrieren des Gehäuses, wobei zumindest die Innenkontur und bevorzugt auch das Profil des mindestens einen Wellmantels reduziert wird.

Die Herstellung des Wabenkörpers erfolgt bevorzugt in einer Art und Weise, wie sie beispielsweise in der EP 0 245 737, der WO 90/03220 oder der DE 3743723 beschrieben ist. Insofern weist der Wabenkörper eine Mehrzahl freier Enden auf, welche die äußere Ausdehnung bilden. Bevorzugt weist der Wabenkörper mehr als vier freie Enden nahe seiner äußeren Ausdehnung auf. Der Begriff der "äuBeren Ausdehnung" soll hierbei im Wesentlichen den Abstand voneinander gegenüberliegender Oberflächen des Wabenkörpers beschreiben. Die äußere Ausdehnung entspricht somit beispielsweise dem Durchmesser des Wabenkörpers, falls dieser einen im Wesentlichen zylindrischen Aufbau hat. Aufgrund der Tatsache, dass derartige Wabenkörper grundsätzlich aber auch mit einem ovalen oder polygonalen Querschnitt bzw. konisch hergestellt werden können, soll der Begriff der "Ausdehnung" einen auch diese Querschnittsformen beschreibenden Parameter bilden.

Weiter wird mindestens ein Wellmantel mit einem Profil hergestellt. Dies erfolgt üblicherweise in der Form, dass ein glattes Blech z.B. mittels zwei kämmender Walzzahnräder mit einer Struktur versehen wird, mit den gewünschten Maßen zurecht geschnitten und anschließend die Enden miteinander verbunden werden. Mit dem Begriff "Profil" ist hier wiederum der Abstand gegenüberliegender Seiten des Wellmantels im zusammengefügten Zustand zu verstehen, so dass wiederum nicht allein auf den Durchmesser bei einer zylindrischen Anordnung des Wellmantels Bezug genommen wird. In Anbetracht der Tatsache, dass der Wellmantel eine Struktur aufweist, existieren "Wellenberge" sowie "Wellentäler", wobei bevorzugt mit "Profil" der Abstand eines Wellenberges mit dem gegenüberliegenden Wellental gemeint ist.

Die Herstellung des Gehäuses mit einer Innenkontur umfasst beispielsweise auch die Herstellung eines zylindrischen Gehäuses. Die "Innenkontur" beschreibt dabei wiederum den Abstand der gegenüberliegenden Gehäuseinnenflächen, da diese maßgeblich zur Anbindung des Wabenkörpers bzw. des Wellmantels sind.

Ein wesentlicher Gesichtspunkt des erfindungsgemäßen Verfahrens ist in der Kalibrierung des Gehäuses nach dem Einfügen des Wabenkörpers und des mindestens einen Wellmantels zu sehen. Bei einer solchen Kalibrierung wird zumindest die Innenkontur, also der Abstand der gegenüberliegenden Innenflächen, des Gehäuses reduziert. Dies wird bevorzugt mittels von außen auf das Gehäuse einwirkenden Kräften bewirkt. Hierzu bieten sich beispielsweise plastische Verformungen des Gehäuses, insbesondere mittels einer Druckwalze oder ähnlichen Werkzeugen an. Das Kalibrieren des Gehäuses bewirkt in der Regel eine Deformierung bzw. Verlagerung des Wellmantels, wodurch ein inniger Kontakt der freien Enden des Wabenkörpers mit dem Wellmantel sowie des Wellmantels mit dem Gehäuse sicher gestellt wird. Im Rahmen eines solchen Kalibrier-Vorgangs wird bevorzugt auch das Profil des mindestens einen Wellmantels reduziert. In der Regel erfolgt dabei eine Veränderung der Struktur des Wellmantels, wobei die freien Enden der den Wabenkörper bildenden Lagen in diese Struktur "einschnappen" und nahezu vollständig an den Wellmantel anliegen. Somit werden frei flatternde Enden vermieden, welche einerseits gegebenenfalls nicht mit dem Wellmantel fügetechnisch verbunden werden können und andererseits infolge der hohen dynamischen Belastung später im Abgassystem leicht zum Abreißen neigen. Dank dieses Kalibrierungsvorgangs bzw. der gemeinsamen Deformation vom Gehäuse und dem mindestens einen Wellmantel (gegebenenfalls auch noch des Wabenkörpers) ist somit ein inniger Kontakt gegeben, der Voraussetzung für eine vollständige Anbindung der Lagen des Wabenkörpers an den mindestens einen Wellmantel sowie des Wellmantels an dem Gehäuse ist.

Alternativ oder kumulativ zur mechanischen Kalibrierung ist es unter Umständen auch möglich, das Gehäuse mittels eines thermischen Schrumpfvorganges zu kalibrieren. In der Regel lassen sich die Kalibrierungsvorgänge stets aufgrund bestimmter Oberflächenstrukturen des Gehäuses und/oder Gefügeänderungen des Materials selbst erkennen, selbst wenn diese Komponenten nachfolgend noch einer thermischen Behandlung, insbesondere zur Ausbildung von fügetechnischen Verbindungen, unterzogen werden.

Gemäß einer weiteren Ausgestaltung des Verfahrens ist das Profil des mindestens einen Wellmantels und/oder die Innenkontur des Gehäuses größer als die Ausdehnung des Wabenkörpers. Besonders bevorzugt ist das Profil und/oder die Innenkontur zwischen 0,2 mm und 2 nun größer als die äußere Ausdehnung des Wabenkörpers, insbesondere zwischen 0,3 mm und 1,2 mm. Auf diese Weise kann verhindert werden, dass bereits beim Einfügen des Wabenkörpers in den Wellmantel bzw. bei einem anschließenden Einfügen des Wellmantels mit dem Wabenkörper in das Gehäuse die freien Enden des Wabenkörpers so "eingeklemmt" bzw. fixiert werden, dass eine Anpassung an die Struktur des Wellmantels bei dem nachfolgenden Kalibrierverfahren nicht oder nicht in dem gewünschten Umfang erfolgt.

Im Rahmen von technischen Vorversuchen hat sich herausgestellt, dass es besonders vorteilhaft ist, die unterschiedlichen Abmaße der Komponenten auf die verwendete Struktur des mindestens einen Wellmantels abzustimmen. Insofern wird weiter vorgeschlagen, dass der mindestens eine Wellmantel eine Struktur mit einer Strukturlänge und einer Strukturhöhe aufweist, und das Profil des mindestens einen Wellmantels und/oder die Innenkontur des Gehäuses um etwa den Betrag der Strukturhöhe größer als die äußere Ausdehnung des Wabenkörpers ist. Die Struktur des Wellmantels kann dabei unterschiedlich ausgeführt sein. Üblicherweise hat diese Struktur eine wellenartige, sinusförmige, rechteckige, trapezförmige Gestalt oder eine ähnliche Form. Mit Strukturlänge ist dabei der Abstand eines "Wellenberges" von einem in Umfangsrichtung des Wellmantels benachbart angeordneten "Wellentales" gemeint. Die Strukturhöhe beschreibt dabei den zur Umfangsrichtung senkrechten Abstand benachbarter Wellenberge und Wellentäler. In diesem Zusammenhang sei angemerkt, dass insbesondere bei der Verwendung mehrerer Wellmäntel, welche gegebenenfalls axial zueinander beabstandet sein können, auch voneinander verschiedene Strukturen mit unterschiedlichen Strukturlängen und/oder Stcukturhöhen eingesetzt werden können, wobei diese Strukturen dann in der Regel an die entsprechenden thermischen und dynamischen Belastungen des Wabenkörpers angepasst sind. Auch bei einer Ausgestaltung des Katalysator-Trägerkörpers mit mehreren Wellmänteln, welche in radialer Richtung sich überlagern bzw. ineinander eingreifen, können ebenfalls unterschiedliche Strukturen zum Einsatz gelangen.

Gemäß noch einer weiteren Ausgestaltung des Verfahrens erfolgt das Herstellen des Wabenkörpers derart, dass die Lagen abwechselnd jeweils aus einer Glattlage und einer Welllage oder aus unterschiedlichen Welllagen aufgebaut, dann gestapelt und anschließend S-förmig und/oder U-förmig gebogen und/oder gewickelt werden, so dass die Enden der Lagen zumindest teilweise die äußere Ausdehnung des Wabenkörpers begrenzen. Die abwechselnde Anordnung einer Glattlage und einer Welllage hat eine erhöhte Stabilität des Wabenkörpers selbst zur Folge. Auch kann hierbei eine nahezu vollständige Verbindung benachbarter Lagen miteinander gewährleistet werden, da die Glattlage stets eine gleichmäßig ebene bzw. leicht gebogene Anlagefläche für die Wellenberge bzw. Wellentäler bereitstellt, um somit ausreichend Kontaktbereiche für eine spätere fügetechnische Verbindung der Lagen miteinander zu gewährleisten. Die Welllage weist im Allgemeinen ebenfalls eine Struktur der oben genannten Art auf, wobei durch das abwechselnde Stapeln von Glattlagen und Welllagen die Kanäle gebildet werden, die später mit einer katalytisch aktiven Trägerschicht versehen werden. Die Struktur der Welllage läuft dabei bevorzugt senkrecht zu einer Achse des Wabenkörpers, so dass die Kanäle im Wesentlichen parallel zu dieser Achse ausgeführt sind. Üblicherweise weist ein so hergestellter Wabenkörper eine Kanaldichte von 400 cpsi ("cells per square inch") bis 1600 cpsi auf.

Entsprechend einer weiteren Ausgestaltung des Verfahrens gelangen die Enden der Lagen infolge der Kalibrierung mit einer Struktur des mindestens einen Wellmantels in Eingriff, wobei diese insbesondere an den mindestens einen Wellmantel zum Anliegen kommen. Hierbei ist es insbesondere vorteilhaft, dass mindestens 90% der freien Enden der Lagen den mindestens einen Wellmantel kontaktieren, wobei dies bevorzugt über die gesamte axiale Länge des Wabenkörpers bzw. der Lagen erfolgt.

Im Hinblick auf die Ausgestaltung der fügetechnischen Verbindungen zwischen dem mindestens einen Wellmantel und dem Gehäuse wird vorgeschlagen, dass der mindestens eine Wellmantel vor dem Einfügen in das Gehäuse mit mindestens einem Lotstreifen versehen wird, der bevorzugt zur nachfolgenden Anbindung des mindestens einen Wellmantels mit dem Gehäuse dient. Derartige Lotstreifen bzw. -bänder sind besonders gut geeignet, um eine definiert begrenzte Verbindung des Wellmantels mit dem Gehäuse sicher zu stellen. Vorzugsweise erfolgt dabei eine Verbindung des Wellmantels mit dem Gehäuse in einem Bereich, in dem ein verhältnismäßig geringes unterschiedliches thermisches Ausdehnungsverhalten von Wabenkörper und Gehäuse zu erwarten ist. Ein solcher Bereich ist insbesondere in einiger Entfernung von den Stirnseiten des Wabenkörpers (insbesondere von der Stirnseite, von der das heiße Abgas in den Katalysator-Trägerkörper eintritt) anzutreffen, da gerade beim Aufheiz- bzw. Abkühlverhalten des Wabenkörpers dieser zu einer tonnenförmigen Verformung neigt, bei der gerade die Stirnseiten ein signifikant höheres Expansions- bzw. Kontraktionsverhalten gegenüber innen liegenden Bereichen zeigen.

Es ist weiterhin vorteilhaft, die Breite des Lotstreifens in Abhängigkeit zumindest von einem der folgenden Parametern zu bestimmen:
(A) äußere Ausdehnung des Wabenkörpers;
(B) Länge des Wabenkörpers;
(C) Zelldichte des Wabenkörpers;
(D) Lagendicke der Lagen,
wobei die Breite des Lotstreifens monoton steigend von einem der Parameter (A), (B), (C) oder (D) abhängt, wenn die jeweiligen anderen drei Parameter (A), (B), (C), (D) konstant gehalten werden.

Somit steigt beispielsweise bei Katalysator-Trägerkörpern mit gleicher Zelldichte, Lagendicke und gleichem Durchmesser im Falle zylindrischer Bauteile mit steigender Länge des Wabenkörpers die Breite des Lotstreifens monoton. Monoton steigen heißt in diesem Zusammenhang, dass es zwar Wabenkörper zweier Längen geben kann, die bei gleicher Zelldichte, Lagendicke und gleichem Durchmesser einen gleich breiten Lotstreifen aufweisen, dass jedoch ein Wabenkörper mit größerer Länge als ein anderer Wabenkörper keinen schmaleren Lotstreifen aufweisen kann.

Speziell bei einem zylindrischen Katalysator-Trägerkörper mit einer Länge von 74,5 mm, einem Durchmesser von 65 mm, einer Zelldichte von 600 cpsi ("cells per square inch") und einer Lagendicke von 0,025 mm (25 µm) beträgt die Breite des Lotstreifens vorteilhafter Weise 4 mm. Die Breite des Lotstreifens hängt bei konstanter Zelldichte, konstantem Durchmesser und konstanter Matrixlänge im wesentlichen linear von der Lagendicke ab, wobei der Proportionalitätsfaktor bei 0,7 bis 1,3, bevorzugt bei 1 liegt. Bei konstanter Zelldichte, konstanter Lagendicke und konstanter Länge des Wabenkörpers hängt die Breite des Lotstreifens im wesentlichen linear vom Durchmesser des zylindrischen Wabenkörpers ab, wobei auch hier der Proportionalitätsfaktor bei 0,7 bis 1,3 liegt.

Weiter wird vorgeschlagen, dass der Katalysator-Trägerkörper über mindestens eine Stirnseite mit einem Lotmittel versehen wird, welches sich in Kontaktbereichen der Lagen miteinander und/oder mit dem mindestens einen Wellmantel anlagert. Das bedeutet, dass der Katalysator-Trägerkörper im zusammengefügten Zustand stirnseitig insbesondere mit einem pulverförmigen Lotmittel in Kontakt gebracht wird. Hierzu ist es unter Umständen vorteilhaft, die zu belotenden Kontaktbereiche zunächst mit einem Haftmittel zu versehen, an dem das stirnseitig zugeführte Lotpulver haften bleibt. Das Haftmittel wird dabei bevorzugt auchüber die Stirnseite des zusammengefügten Katalysator-Trägerkörpers eingegeben, wobei sich das (flüssige) Haftmittel infolge eines Kapilar-Effektes gerade und insbesondere ausschließlich in diesen Kontaktbereichen anordnet. Das hat unter anderem auch den vorteilhaften Effekt, dass über die Menge des zugeführten Haftmittels auch die haftenbleibende Anzahl von Lotkörnern definiert eingestellt werden kann.

Insbesondere für den Fall, dass eine fügetechnische Verbindung der Komponenten miteinander bzw. betreffend den Wabenkörper der Lagen untereinander exakt begrenzt (also nicht über die gesamte axiale Länge des Wabenkörpers) ausgeführt werden soll, wird vorgeschlagen, vor dem Beloten Passivierungsmittel vorzusehen, welche mindestens einen Lotbereich begrenzen. Derartige Passivierungsmittel können einerseits strukturelle Maßnahmen an den Komponenten selbst umfassen, wie beispielsweise die Vorsehung von Mikrostrukturen oder Veränderungen der Oberflächentopographie (Aufrauen etc.). Es ist aber beispielsweise auch möglich, derartige Passivierungsmittel in Form einer zusätzlichen Beschichtung (Metall-Oxide, keramische Beschichtungen und dergleichen) aufzutragen bzw. zu generieren, welche ebenfalls einen Fluss des Lotmittels über die Passivierungsmittel hinaus verhindern.

Gemäß einer vorteilhaften Ausgestaltung des Verfahrens sind die Passivierungsmittel zumindest teilweise als ein Luftspalt ausgebildet. Der Luftspalt unterbricht in vorteilhafter Weise die Kapillarkraft, so dass ein weiteres Verlaufen des Lotmittels und/oder gegebenenfalls eines Haftmittels über die Passivierungsmittel hinaus verhindert wird. In diesem Zusammenhang ist es vorteilhaft, den Luftspalt durch eine Aussparung im Gehäuse und/oder eine Stufe im Wellmantel und gegebenenfalls Abstandsmittel zwischen Gehäuse und Wellmantel auszubilden. Das Ausbilden von Abstandsmitteln kann nötig sein, um zu verhindern, dass der Luftspalt vor einer thermischen Behandlung allein durch die Spannung des Wabenkörpers geschlossen wird.

Gemäß einer weiteren vorteilhaften Ausgestaltung des Verfahrens ist als Abstandsmittel eine keramische Schicht und/oder eine Metalloxidhaltige Schicht auf der Außenoberfläche des Wellmantels und/oder der Innenoberfläche des Gehäuses mit einer Dicke, die im wesentlichen der Höhe des Luftspalts entspricht, ausgebildet ist. So dienen die Abstandsmittel in vorteilhafter Weise der Ausbildung eines möglichst gleichmäßigen Luftspalts.

Weiterhin ist es vorteilhaft, wenn die Luftspalthöhe bei 5 mm oder weniger, bevorzugt bei weniger als 2 mm liegt.

Gemäß einer vorteilhaften Ausgestaltung des Verfahrens sind die Passivierungsmittel zumindest teilweise in Form mindestens einer metallischen Folie ausgebildet sind.

Gemäß einer weiteren vorteilhaften Ausgestaltung des erfindungsgemäßen Verfahrens ist die mindestens eine metallische Folie mit dem Wellmantel oder dem Gehäuse verklebt und überlappt zumindest teilweise mit dem Lotstreifen. Dies führt nach einer thermischen Behandlung dazu, dass die metallische Folie zum einen mit dem Gehäuse oder dem Wellmantel verbunden ist, aber andererseits gewährleistet, dass die Verbindung des Gehäuses mit dem Wellmantel räumlich begrenzt ist. Insbesondere kann die metallische Folie aus dem Material ausgebildet sein, aus dem auch die Lagen, aus denen der Wabenkörper aufgebaut ist, hergestellt sind. Vorteilhaft ist es in diesem Zusammenhang, dass die mindestens eine metallische Folie dünner als 70 µm, bevorzugt dünner als 50 µm, besonders bevorzugt dünner als 30 µm ausgebildet ist

Weiter wird vorgeschlagen, dass der Katalysator-Trägerkörper eine thermische Behandlung erfährt, welche fägetechnische Verbindungen der Lagen untereinander, der Lagen mit dem mindestens einen Wellmantel und/oder dem mindestens einen Wellmantel mit dem Gehäuse zur Folge hat. Dies umfasst einerseits eine Lotverbindung der einzelnen Komponenten miteinander bzw. untereinander. Alternativ hierzu können jedoch im Rahmen der thermischen Behandlung alternativ oder kumulativ Schweißverbindungen oder Diffusionsanbindungen generiert werden.

Gemäß einem weiteren Aspekt der Erfindung wird ein Katalysator-Trägerkörper vorgeschlagen, welcher einen Wabenkörper umfasst, der zumindest teilweise strukturierte Lagen mit Enden hat, wobei die Lagen für ein Fluid durchströmbare Kanäle bilden. Der Katalysator-Trägerkörper umfasst zudem ein Gehäuse, welches den Wabenkörper zumindest teilweise umgibt, sowie mindestens einen Wellmantel, der zwischen dem Wabenkörper und dem Gehäuse angeordnet ist und den Wabenkörper mit dem Gehäuse verbindet Der Katalysator-Trägerkörper zeichnet sich dadurch aus, dass mindestens 90%, bevorzugt mindestens 95%, insbesondere mehr als 98% der Enden mit dem mindestens einen Wellmantel fügetechnisch verbunden sind. Vorzugsweise sind alle freien Enden des Wabenkörpers mit dem Wellmantel verbunden, wobei ein solcher Katalysator-Trägerkörper bevorzugt nach einer Ausgestaltung des oben beschriebenen Verfahrens hergestellt wird. Wie bereits erläutert, hat der innige Kontakt der freien Enden des Wabenkörpers mit dem mindestens einen Wellmantel eine deutlich erhöhte Anzahl von fügetechnischen Verbindungen zur Folge, die einen langzeitigen Einsatz derartiger Katalysator-Trägerkörper gerade in mobilen Abgasanlagen sicherstellt. Ganz besonders bevorzugt sind dabei die Enden über den gesamten Überdeckungsbereich von Wabenkörper und Wellmantel miteinander in Kontakt bzw. verbunden.

Gemäß einer vorteilhaften Ausgestaltung umfasst der Katalysator-Trägerkörper metallische Glattlagen und Welllagen, welche bevorzugt abwechselnd zueinander angeordnet und S-förmig und/oder U-förmig gebogen sind, so dass alle Enden zumindest teilweise eine äußere Ausdehnung des Wabenkörpers bilden. Besonders bevorzugt ist dabei die Ausgestaltung der Lagen mit einer Lagendicke kleiner als 0,1 mm, insbesondere kleiner als 0,05 mm und bevorzugt kleiner als 0,02 mm. Die Glattlagen und Welllagen bestehen dabei aus einem ferritischen Metall bzw. einer entsprechenden Metalllegierung, welche Aluminium und Chrom umfassen, um eine Korrosionsfestigkeit der Lagen auch bei sehr hohen Temperaturen (Betriebstemperaturen des Katalysator-Trägerkörpers bis 1300°C) standhalten. Die vorgeschlagene Lagendicke bewirkt, dass der Wabenkörper bzw. der Katalysator-Trägerkörper eine relativ geringe oberflächenspezifische Wärmekapazität aufweist Dies hat zur Folge, dass der Katalysator-Trägerkörper den schnell wechselnden Umgebungsbedingungen infolge unterschiedlicher Lastwechsel der Verbrennungskraftmaschine rasch folgen kann, wobei insbesondere beim Kaltstart der Verbrennungskraftmaschine ein schnelles Anspringen der katalytisch motivierten Reaktionen gewährleistet ist.

Weiter wird vorgeschlagen, dass der Wabenkörper, der mindestens eine Wellmantel und das Gehäuse eine zylindrische Form aufweisen. Die zylindrische Form hat den Vorteil, dass eine relativ unkomplizierte und einfache Integration des Katalysator-Trägerkörpers in das Abgassystem selbst realisiert werden kann, ohne zusätzliche Positionierungshilfen.

Gemäß noch einer weiteren Ausgestaltung des Katalysator-Trägerkörpers ist ein Verbindungsbereich des mindestens einen Wellmantels mit dem Gehäuse flächenmäßig kleiner als ein Anbindungsbereich des mindestens einen Wellmantels mit dem Wabenkörper, wobei sich vorzugsweise der Verbindungsbereich und der Anbindungsbereich zumindest teilweise überlagern. Ganz besonders ist die Ausgestaltung eines Katalysator-Trägerkörpers bevorzugt, bei dem sich der Anbindungsbereich über die gesamte axiale Länge des Wabenkörpers erstreckt, wobei der Verbindungsbereich zwischen Wellmantel und dem Gehäuse als schmaler (Breite kleiner 10 mm, bevorzugt kleiner als 6 mm, besonders bevorzugt kleiner oder gleich 4 mm) umlaufender Streifen in der Mitte des Katalysator-Trägerkörpers ausgeführt ist. Unter Umständen kann es jedoch auch vorteilhaft sein, dass die Anbindung des Wellmantels an den Wabenkörper lediglich auf schmale Bereiche nahe den Stirnseiten des Wabenkörpers ausgeführt ist. Bei der letztgenannten Ausgestaltung ist allerdings bevorzugt an der mittigen Anordnung des Verbindungsbereiches betreffend die Anbindung des Wellmantels an das Gehäuse festzuhalten.

Es ist weiterhin vorteilhaft, den Katalysator-Trägerkörpers so auszulegen, dass die Breite des Verbindungsbereichs zumindest von einem der folgenden Parameter abhängt:
(A) äußere Ausdehnung des Wabenkörpers;
(B) Länge des Wabenkörpers;
(C) Zelldichte des Wabenkörpers;
(D) Lagendicke der Lagen,
wobei die Breite des Verbindungsbereichs monoton steigend von einem der Parameter (A), (B), (C) oder (D) abhängt, wenn die jeweiligen anderen drei Parameter (A), (B), (C), (D) konstant gehalten werden.

Es ist vorteilhaft, die Breite des Verbindungsbereichs variabel zu gestalten, da Katalysator-Trägerkörper mit unterschiedlichen äußeren Ausdehnungen, Längen, Zelldichten oder Lagendicken unterschiedliche Anforderungen an die Anbindung zwischen Gehäuse und Wellmantel stellen. Insbesondere beeinflussen diese Parameter die mögliche tonnenförmige Verformung des Wabenkörpers, was unterschiedliche Breiten des Verbindungsbereichs vorteilhaft macht. Die oben zur Breite des Lotstreifens gemachten Aussagen gelten in gleicher Weise für die Breite des Verbindungsbereichs und umgekehrt.

Nach einer vorteilhaften Ausgestaltung des Katalysator-Trägerkörpers ist der Verbindungsbereich axial durch einen Luftspalt begrenzt. Besonders vorteilhaft ist es in diesem Zusammenhang, den Luftspalt durch eine Aussparung im Gehäuse und/oder eine Stufe im Wellmantel und gegebenenfalls Abstandsmittel zwischen Gehäuse und Wellmantel auszubilden.

Betreffend die Dimensionierung des Katalysator-Trägerkörpers wird vorgeschlagne, dass die Manteldicke des mindestens einen Wellmantels betragsmäßig zwischen der Lagendicke der Lagen und der Gehäusedicke des Gehäuses liegt, insbesondere in einem Bereich von 0,08 mm bis 0,25 mm. Dies hat zur Folge, dass der Wellmantel eine oberflächenspezifische Wärmekapazität aufweist, die zwischen der oberflächenspezifischen Wärmekapazität der Lagen und der des Gehäuses liegt. Insofern ist ein so ausgeführter Wellmantel besonders gut geeignet, die unterschiedlichen thermischen Ausdehnungsverhalten der Lagen und des Gehäuses zu kompensieren. Der mindestens eine Wellmantel und bevorzugt auch das Gehäuse sind dabei aus dem gleichen bzw. einem ähnlichen Material wie die Lagen des Wabenkörpers hergestellt.

Gemäß einer weiteren Ausgestaltung des Katalysator-Trägerkörpers hat der Wabenkörper eine Länge in Richtung einer Achse, die einer Erstreckung des Wellmantels in Richtung der Achse entspricht. Während generell die Länge des Wabenkörpers, die Erstreckung des Wellmantels sowie das Abmaß des Gehäuses in Richtung der Achse frei variierbar sind, schließt bei der hier vorgeschlagenen Ausgestaltung der Wellmantel bündig mit den Stirnseiten des Wabenkörpers ab. Dies ist gerade im Hinblick auf die Fertigung und insbesondere die Positionierung des mindestens einen Wellmantels bezüglich des Wabenkörpers vorteilhaft.

Entsprechend einer besonders bevorzugten Ausgestaltung des mindestens einen Wellmantels wird vorgeschlagen, dass dieser eine Strukturlänge und eine Strukturhöhe hat, wobei die Strukturlänge im Bereich von 1,5 mm bis 3,5 mm liegt, und die Strukturhöhe vorzugsweise 0,3 mm bis 1 mm beträgt. Ein so ausgeführter Wellmantel gewährleistet einerseits eine ausreichende axiale, radiale oder in Umfangsrichtung gerichtete Expansion bzw. Kontraktion des Wabenkörpers, andererseits wird dadurch auch sicher gestellt, dass die freien Enden der Lagen "einschnappen" und ein Vorbeiströmen von unbehandeltem Abgas beim späteren Einsatz des Katalysator-Trägerkörpers im Abgassystem mobiler Verbrennungskraftmaschinen verhindert wird.

Die Erfindung wird nachfolgend anhand einiger Zeichnungen näher erläutert. Dabei wird hier ausdrücklich darauf hingewiesen, dass die Erfindung auf die dargestellten Ausfürungsbeispiele nicht begrenzt ist, sondern diese im Wesentlichen zur näheren Illustrierung der Vorteile der Erfindung ausgewählt wurden.

Es zeigen:
- Figur 1:: eine Ausgestaltung des Katalysator-Trägerkörpers in einer Explosionsdarstellung;
- Figur 2:: eine Detailansicht einer Ausgestaltung des Katalysator-Trägerkörpers im Schnitt;
- Figur 3:: schematisch den Ablauf einer Ausgestaltung des Herstellungsverfahrens eines Katalysator-Trägerkörpers;
- Figur 4:: eine perspektivische Detaildarstellung einer Ausgestaltung des Katalysator-Trägerkörpers im Randbereich;
- Figur 5:: schematisch einen Ausschnitt eines Verbindungsbereichs zwischen Gehäuse und Wellmantel eines Ausführungsbeispiels;
- Figur 6:: schematisch einen Ausschnitt eines Verbindungsbereichs zwischen Gehäuse und Wellmantel eines weiteren Ausführungsbeispiels; und
- Figur 7:: schematisch einen Ausschnitt eines Verbindungsbereichs zwischen Gehäuse und Wellmantel eines noch weiteren Ausführungsbeispiels.

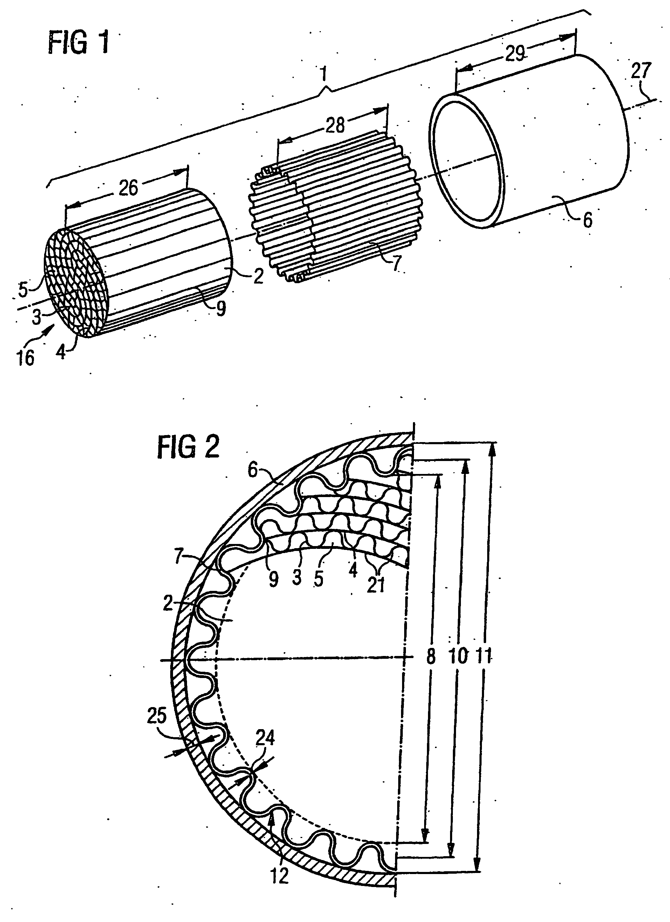

Figur 1 zeigt perspektivisch und in einer Explosionsdarstellung eine Ausgestaltung des erfindungsgemäßen Katalysator-Trägerkörpers 1 umfassend einen Wabenkörper 2 sowie ein zum Wabenkörper 2 bzw. einer Achse 27 konzentrisch angeordneten Wellmantel 7 und ein ebenfalls konzentrisch angeordnetes Gehäuse 6. Der Wabenkörper 2 ist hier zylindrisch ausgeführt, wobei dieser einer Mehrzahl von Welllagea 3 und Glattlagen 4 umfasst, die so angeordnet bzw. gestapelt und/oder gewickelt sind, dass deren Enden 9 den Umfang des zylindrisch ausgeführten Wabenkörpers 2 zumindest teilweise bilden. Infolge der abwechselnden Anordnung von Welllagen 3 und Glattlagen 4 sind Kanäle 5 gebildet, welche für ein Abgas durchströmbar sind. Bei der dargestellten Ausführungsform des Wabenkörpers 2 erstrecken sich die Kanäle 5 von einer Stirnseite 16 bis zur gegenüberliegenden Stirnseite 16 über die gesamte Länge 26 des Wabenkörpers 2, wobei diese im Wesentlichen parallel zur Achse 27 ausgebildet sind.

Der dargestellte Katalysator-Trägerkörper 1 umfasst einen Wellmantel 7, dessen Erstreckung 28 im Wesentlichen der Länge 26 des Wabenkörpers 2 entspricht. Dabei wird der Wellmantel 7 so über den Wabenkörper 2 gestülpt, dass die Kanten des Wellmantels 7 im Wesentlichen bündig zu den Stirnseiten 16 des Wabenkörpers 2 angeordnet sind. Auch das dargestellte Gehäuse 6 weist ein Abmaß 29 in Richtung der Achse 27 auf, welche im Wesentlichen der Erstreckung 28 des Weltmantels 7 sowie der Länge 26 des Wecnkörpers 2 entspricht. Das hat zur Folge, dass der Katalysator-Trägerkörper 1 im zusammengefügten Zustand eine nahezu bündige Anordnung von Wabenkörper 2, Wellmantel 7 und Gehäuse 6 darstellt.

Figur 2 zeigt die Hälfte eines Querschnittes einer Ausgestaltung des Katalysator-Tragerkörpers 1. Hierbei lässt sich erkennen, dass der Wabenkörper 2 von einem Wellmantel 7 umgeben wird, der wiederum von dem Gehäuse 6 umgeben ist. Im oberen Bereich dieser Darstellung sind Welllagen 3 und Glattlagen 4 angedeutet, welche für das Abgas durchströmbare Kanäle 5 bilden. Die Welllagen 3 und Glattlagen 4 weisen dabei jeweils eine Lagendicke 21 auf, die bevorzugt im Bereich von 0,05 mm und 0,015 mm liegt. Aus dieser Darstellung lässt sich erkennen, dass die äußere Ausdehnung 8 des Wabenkörpers 2 zumindest teilweise durch die Enden 9 der Welllagen 3 bzw. Glattlagen 4 gebildet ist.

Die dargestellte Ausführungsform betrifft einen Katalysator-Trägerkörper 1, dessen Gehäuse 6 bereits kalibriert wurde. Dies lässt sich dadurch erkennen, dass mindestens 90% der Enden 9 der Lagen 3,4 mit dem Wellmantel 7 in Kontakt stehen bzw. mit diesem fügetechnisch verbunden sind. Dies konnte dadurch bewirkt werden, dass die Innenkontur 11 des Gehäuse 6 sowie das Profil 10 des Wellmantels 7 infolge dieses Kalibriervorgangs reduziert wurde, und dabei eine Deformierung bzw. Verlagerung der Struktur 12 des Wellmantels 7 erfolgte. Die Enden 9 der Lagen 3,4 passen sich derart an, dass diese nun an der Innenseite des Wellmantels 7 anliegen, wodurch eine dauerhafte fügetechnische Verbindung des Wabenkörpers 2 mit dem Wellmantel 7 sicher gestellt ist. Der Wellmantel 7 weist hier eine Manteldicke 24 auf, die zwischen der Lagendicke 21 der Welllagen 3 und Glattlagen 4 einerseits und der Gehäusedicke 25 des Gehäuses 6 andererseits liegt.

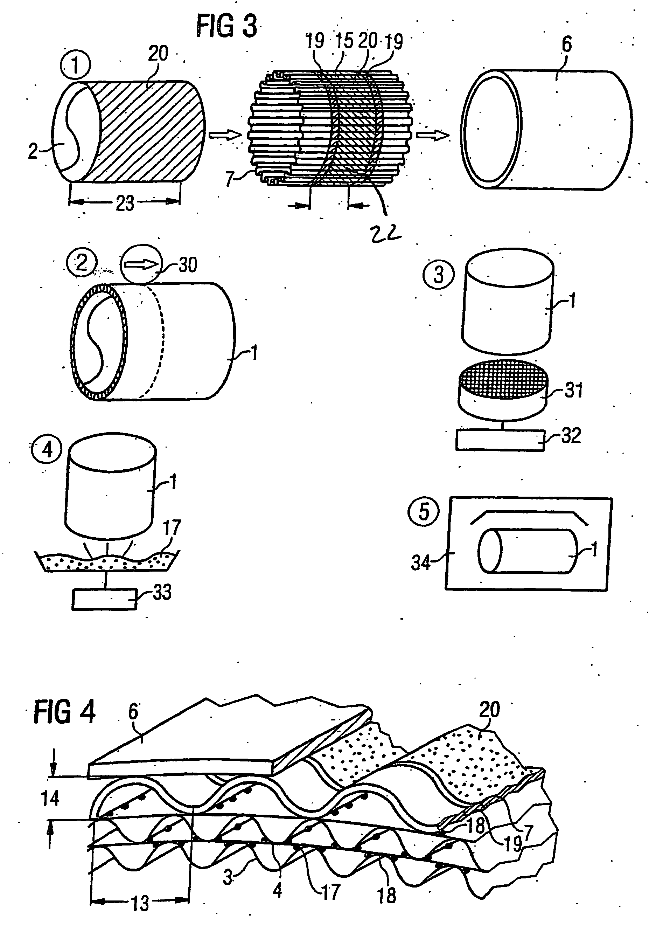

Figur 3 zeigt schematisch einen Ablauf einer Ausgestaltung des erfindungsgemä-Ben Verfahrens. Der erste Schritt umfasst dabei die Herstellung eines Wabenkörpers 2, eines Wellmantels 7 sowie eines Gehäuses 6, welche anschließend ineinander gefügt werden. Der Wabenkörper 2 umfasst S-förmig gebogene Lagen, welche in einem Anbindungsbereich 23, der hier praktisch die gesamte Außenfläche des Wabenkörpers 2 umfasst, mit dem Wellmantel 7 verbunden werden soll. Der Wellmantel 7 weist auf seiner Außenseite bereits einen umlaufenden Lotstreifen 15 auf, der bei einer nachfolgenden thermischen Behandlung des Katalysator-Trägerkörpers 1 eine Verbindung mit dem Gehäuse 6 bewirken soll. Der Verbindungsbereich 22 weist eine Breite auf und ist dabei deutlich kleiner ausgeführt als der Anbindungsbereich 23 zwischen Wabenkörper 2 und Wellmantel 7. Die beiden Lotbereiche 20 weisen jeweils eine definierte Begrenzung auf. Während der Anbindungsbereich 23 durch die Stirnseiten 16 des Wabenkörpers 2 begrenzt wird, weist der Wellmantel 7 Passivierungsmittel 19 auf, welche den Verbindungsbereich 22 definieren. Dadurch wird verhindert, dass das Lot des Lotstreifens 15 bei einer Erwärmung über die Grenzen des Verbindungsbereiches 22 hinwegfließt. In diesem Ausführungsbeispiel sind die Passivienmgsmittel 19 als Schicht ausgeführt, die beispielsweise aus keramischem und/oder Metalloxidhaltigem Material besteht. Weiterhin können die Passivierungsmittel 19 auch durch Mikrostrukturen oder auch durch Aufrauen der Oberfläche des Wellmantels 7 und/oder der entsprechenden Bereiche der Innenoberfläche des Gehäuses 6 ausgebildet werden.

Die Breite des Verbindungsbereichs 22 wird in Abhängigkeit von folgenden Parametern bestimmt:
(A) äußere Ausdehnung des Wabenkörpers (6);
(B) Länge des Wabenkörpers (6);
(C) Zelldichte des Wabenkörpers (6);
(D) Lageadicke (21) der Lagen (3_{,} 4).
Als besonders vorteilhaft hat es sich in diesem Zusammenhang erwiesen, dass die Breite des Verbindungsbereichs 22 oder auch des Lotstreifens 15 mit einem der Parameter (A), (B), (C), (D) monoton steigt, wenn die jeweiligen anderen drei Parameter konstant bleiben. So können die unterschiedlichen thermischen Verarmungen und Ausdehnungen der Wabenkörper in Abhängigkeit von den Parametern (A), (B), (C), (D) bei der Auslegung der Breite des Lotstreifens 15 oder des Verbindungsbereichs 22 berücksichtigt werden.

Im zweiten Schritt erfolgt das gemeinsame Kalibrieren der Komponenten des Katalysator-Trägerkörpers 1. In der dargestellten Abbildung erfolgt eine plastische Verformung des Gehäuses 6 mittels eines Werkzeuges 30, das hier als Walzrolle dargestellt ist Die Kalibrierung erfolgt insbesondere nur in dem Bereich, in dem auch ein Wellmantel 7 angeordnet ist. Der Kalibriervorgang selbst hat eine Reduzierung der Innenkontur 11 und bevorzugt auch des Profils 10 des mindestens einen Wellmantels 7 zur Folge, wodurch mindestens 90% der Enden 9 der Lagen an der Struktur des Wellmantels 7 anliegen.

Im dritten Schritt erfolgt die Kontaktierung des Katalysator-Trägerkörpers 1 mit einem Verteiler 31, wobei Haftmittel 32 in innere Bereiche des Wabenkörpers 2 bzw. des Katalysator-Trägerkörpers 1 eingeleitet werden. Das Haftmittel 32 lagert sich dabei bevorzugt in den Kontaktbereichen der Lagen miteinander bzw. der Lagen mit dem Wellmantel an, da hier überwiegend Kapillar-Kräfte eine gleichmäßige Verteilung des Haftmittels 32 bewirken.

Im vierten Schritt ist die stirnseitige Belotung des Katalysator-Trägerkörpers 1 dargestellt, wobei das Lotpulver 17 mittels eines Wirbelbettes 33, also mit Unterstützung beispielsweise eines Gebläses, in die inneren Bereiche des Katalysator-Trägerkörpers 1 gelangt. Das pulverförmige Lotmittel 17 bleibt dabei an den mit Haftmittel benetzten Kontaktbereichen haften.

Im fünften Schritt ist eine thermische Behandlung des Katalysator-Trägerkörpers dargestellt, wobei dieser bevorzugt in einem Hochtemperatur-Vakuum-Ofen 34 erwärmt wird. Bei der Erwärmung des Katalysator-Trägerkörpers verflüssigt sich das Lotmittel 17 bzw. der Lotstreifen 15, wobei nach Abkühlung des Katalysator-Trägerkörpers fügetechnischen Verbindungen der Komponenten untereinander generiert sind. Ein so hergestellter Katalysator-Trägerkörper 1 wird in der Regel anschließend mit einer Trägerschicht versehen, mit katalytisch aktivem Material imprägniert und in den Abgasanlagen unterschiedlichster mobiler Verbrennungskraftmaschinen von Pkw's, Lkw's Motorrädern, Rasenmähern, Kettensägen oder dergleichen eingesetzt.

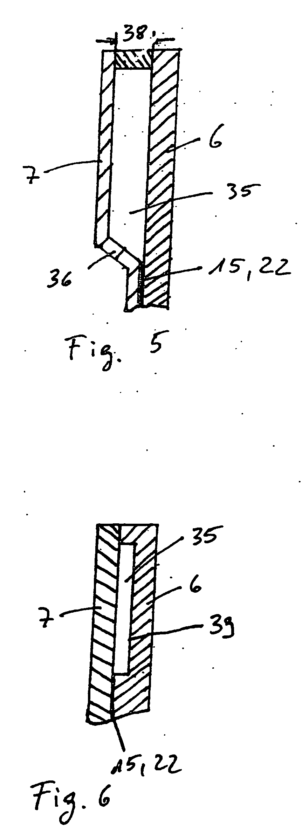

Figur 4 zeigt schematisch und perspektivisch eine Detailansicht eines Katalysator-Trägerkörpers 1 in dessen Randbereich. Es ist ein Teil des Gehäuses 6 dargestellt, das mit einem Wellmantel 7 in Kontakt steht. Der Wellmantel 7 weist eine Struktur 12 auf, welche durch eine Strukturhöhe 14 sowie eine Strukturlänge 13 charakterisiert ist. Zudem weist der Wellmantel 7 als Passivierungsmittel 19 eine Mikrostruktur auf, die verhindert, dass beispielsweise Lot aus dem Lotbereich 20 über das Passivierungsmittel hinaus fließt, da an dieser Stelle der Kapillar-Effekt unterbrochen wird. Somit werden Verbindungen außerhalb des Verbindungsbereiches 22 (nicht dargestellt) zwischen Wellmantel 7 und Gehäuse 6 einfach und effektiv vermieden.

In dem dargestellten Detail wird der Wabenkörper 2 nicht durch freie Enden 9 (nicht dargestellt) begrenzt, vielmehr liegen hier die Welllagen 3 und Glattlagen 4 im Wesentlichen parallel zum Wellmantel 7. Eine solche Anordnung ergibt sich beispielsweise bei S-formig gebogenen Lagen 3,4, wo in Umfangsrichtung die äußere Ausdehnung des Wabenkörpers abwechselnd durch Enden der Lagen und mittleren Bereichen der Lagen begrenzt wird. Die Lagen 3,4 liegen aneinander an und bilden Kontaktbereiche 18, die anschließend zur Ausbildung von fügetechnischen Verbindungen herangezogen werden. Nach dem Belotungsvorgang ist in diesen Kontaktbereichen 18 das pulverförmige Lotmittel 17 angeordnet, wobei dieses bevorzugt an einem dort angelagerten Haftmittel klebt.

Weitere Beispiele zur Ausbildung der Passivierungsmittel 19 sind in den Figuren 5 bis 7 gezeigt. Figur 5 zeigt schematisch einen Ausschnitt des Gehäuses 6 und des Wellmantels 7 in einem axialen Schnitt. Wellmantel 7 und Gehäuse 6 sind durch einen Verbindungsbereich 22, der durch einen Lotstreifen 15 gebildet ist, verbunden. Als Passivierungsmittel ist in diesem Ausführungsbeispiel ein Luftspalt 35 ausgebildet. Dieser Luftspalt 35 wird durch eine Stufe 36 im Wellmantel 7 gebildet. Um zu verhindern, dass der wellmantel 7 ungleichmäßig mit dem Gehäuse 6 verbunden wird, ist weiterhin ein Abstandsmittel ausgebildet, dass eine schräge Anlage des Wellmantels 7 an das Gehäuse 6 verhindert. Das Abstandsmittel kann beispielsweise als eine keramische Schicht oder eine Metalloxidhaltige Schicht ausgeführt sein. Vorteilhaft ist es, wenn die Abstandsmittel im wesentlichen die Höhe 38 des Luftspalts 35 ausgleichen. Beim Durchfuhren der thermischen Behandlung zum Ausbilden von Verbindungen führt der Luftspalt wirkungsvoll zu einer Unterbrechung der Kapillarkraft, so dass wirkungsvoll verhindert wird, dass das Lot weiter verläuft. Figur 6 zeigt eine weitere Möglichkeit der Ausbildung eines Luftspalts 35 zwischen Gehäuse 6 und Wellmantel 7 als Passivierungsmittel 19. Hierbei wird der Luftspalt 35 durch eine Aussparung 39 des Gehäuses gebildet.

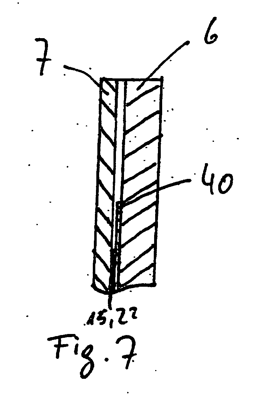

In Figur 7 sind die Passivierungsmittel 19 durch eine metallische Folie 40 gebildet. Figur 7 zeigt die Größenverhältnisse nur schematisch, normalerweise kommt es spätestens nach dem Kalibrierungsschritt zur Anlage der metallischen Folie 40 sowohl am Wellmantel 7, als auch am Gehäuse 6. Die metallische Folie 40 überlappt den Lotstreifen 15 teilweise, so dass es zur Ausbildung einer fügetechnischen Verbindung zwischen der metallischen Folie 40 und dem Wellmantel 7 kommt. Jedoch erfolgt keine fiigetechnische Verbindung zwischen der metallischen Folie 40 und dem Gehäuse 6, so dass die metallische Folie 40 wirkungsvoll den Verbindungsbereich 22 begrenzt und eine weitere Anbindung des Wellmantels 7 an das Gehäuse 6 verhindert. Um die Ausbildung einer gegebenenfalls ungewollten Stufe zu verhindern, ist es vorteilhaft, die metallische Folie 40 möglichst dünn auszuführen, bevorzugt mit einer Dicke von weniger als 50 µm, besonders bevorzugt von weniger als 30 µm.

Das hier beschriebene Verfahren zur Herstellung eines Katalysator-Trägerkörpers ist relativ einfach und kann mit einer hohen Prozesssicherheit gerade in den Fertigungsablauf einer Serienfertigung von Katalysator-Trägerkörpern integriert werden. Der hieraus resultierende Katalysator-Trägerkörper zeichnet sich insbesondere durch seine langlebige strukturelle Integrität aus, so dass dieser robuste bzw. stabile Katalysator-Trägerkörper gerade für extreme Belastungsverhältnisse besonders gut geeignet ist.

### Bezugszeichentiste

- 1: Katalysator-Trägerkörper
- 2: Wabenkörper
- 3: Welllage
- 4: Glattlage
- 5: Kanal
- 6: Gehäuse
- 7: Wellmantel
- 8: Ausdehnung
- 9: Ende
- 10: Profil
- 11: Innenkontur
- 12: Struktur
- 13: Strukturlänge
- 14: Strukturhöhe
- 15: Lotstreifen
- 16: Stirnseite
- 17: Lotmittel
- 18: Kontaktbereich
- 19: Passivierungsmittel
- 20: Lotbereich
- 21: Lagendicke
- 22: Verbindungsbereich
- 23: Anbindungsbereich
- 24: Manteldicke
- 25: Gehäusedicke
- 26: Länge
- 27: Achse
- 28: Erstreckung
- 29: Abmaß
- 30: Werkzeug
- 31: Verteiler
- 32: Haftmittel
- 33: Wirbelbett
- 34: Ofen
- 35: Luftspalt
- 36: Stufe
- 38: Höhe des Luftspalts
- 39: Aussparung
- 40: metallische Folie

## Patentansprüche

1. Verfahren zur Herstellung eines Katalysator-Trägerkörpers (1) umfassend einen Wabenkörper (2), der zumindest teilweise strukturierte Lagen (3, 4) hat, welche für ein Fluid durchströmbare Kanäle (5) bilden, ein Gehäuse (6), welches den Wabenkörper (2) zumindest teilweise umgibt, sowie mindestens einen Wellmantel (7), der zwischen dem Wabenkörper (2) und dem Gehäuse (6) angeordnet ist und den Wabenkörper (2) mit dem Gehäuse (6) verbindet, welches folgende Schritte umfasst:
- Herstellen des Wabenkörpers (2), wobei dieser eine äußere Ausdehnung (8) hat, die zumindest teilweise durch Enden (9) der Lagen (3, 4) gebildet ist;
- Herstellen des mindestens einen Wellmantels (7) mit einem Profil (10);
- Herstellen eines Gehäuses (6) mit einer Innenkontur (11);
- Einfügen des Wabenkörpers (2) in den mindestens einen Wellmantel (7);
- Einfügen des mindestens einen Wellmantels (7) mit dem Wabenkörper (2) in das Gehäuse (6);
- Kalibrieren des Gehäuses (6), wobei zumindest die Innenkontur (11) und bevorzugt auch das Profil (10) des mindestens einen Wellmantels (7) reduziert wird.

2. Verfahren nach Anspruch 1, bei dem das Profil (10) des mindestens einen Wellmantels (7) und/oder die Innenkontur (11) des Gehäuses (6) größer als die äußere Ausdehnung (8) des Wabenkörpers (2) ist.

3. Verfahren nach Anspruch 2, bei dem das Profil (10) des mindestens einen Wellmantels (7) und/oder die Innenkontur (11) des Gehäuses (6) zwischen 0,2 mm und 2 mm größer als die äußere Ausdehnung (8) des Wabenkörpers (2) ist, insbesondere zwischen 0,3 mm und 1,2 mm.

4. Verfahren nach Anspruch 2 oder 3, bei dem der mindestens eine Wellmantel (7) eine Struktur (12) mit einer Strukturlänge (13) und einer Strukturhöhe (14) ausweist, und das Profil (10) des mindestens einen Wellmantels (7) und/oder die Innenkontur (11) des Gehäuses (6) um etwa den Betrag der Strukturhöhe (13) größer als die äußere Ausdehnung (8) des Wabenkörpers (2) ist.

5. Verfahren nach einem der vorhergehenden Ansprüche, bei dem das Herstellen des Wabenkörpers (2) derart erfolgt, dass die Lagen (3, 4) abwechselnd aus jeweils einer Glattlage (4) und einer Welllage (3) oder aus unterschiedlichen Welllagen (3) aufgebaut, dann gestapelt und anschließend S-förmig und/oder U-förmig gebogen und/oder gewickelt werden, so dass die Enden (9) der Lagen (3, 4) zumindest teilweise die äußere Ausdehnung (8) des Wabenkörpers (2) begrenzen.

6. Verfahren nach einem der vorhergehenden Ansprüche, bei dem die Enden (9) der Lagen (3, 4) infolge der Kalibrierung mit einer Struktur (12) des mindestens einen Wellmantels (7) in Eingriff gelangen, insbesondere an dem mindestens einen Wellmantel (7) zum Anliegen kommen.

7. Verfahren nach einem der vorhergehenden Ansprüche, bei dem der mindestens eine Wellmantel (7) vor dem Einfügen in das Gehäuse (6) mit mindestens einem Lotstreifen (15) versehen wird, der bevorzugt zur nachfolgenden Anbindung des mindestens einen Wellmantels (7) mit dem Gehäuse (6) dient.

8. Verfahren nach einem der vorhergehenden Ansprüche, bei dem der Katalysator-Trägerkörper (1) über zumindest eine Stirnseite (16) mit einem Lotmittel (17) versehen wird, welches sich in Kontaktbereichen (18) der Lagen (3, 4) miteinander und/oder mit dem mindestens einen Wellmantel (7) anlagert.

9. Verfahren nach Anspruch 7 oder 8, bei dem vor dem Beloten Passivierungsmittel (19) vorgesehen werden, welche mindestens einen Lotbereich (20) begrenzen.

10. Verfahren nach Anspruch 9, bei dem die Passivierungsmittel (19) zumindest teilweise als ein Luftspalt (35) ausgebildet sind.

11. Verfahren nach Anspruch 10, bei dem der Luftspalt (35) durch eine Aussparung (39) im Gehäuse (6) und/oder eine Stufe (36) im Wellmantel (7) und gegebenenfalls Abstandsmittel zwischen Gehäuse (6) und Wellmantel (7) gebildet wird.

12. Verfahren nach Anspruch 11, bei dem als Abstandsmittel eine keramische Schicht und/oder eine Metalloxidhaltige Schicht auf der Außenoberfläche des Wellmantels (7) und/oder der Innenoberfläche des Gehäuses (6) mit einer Dicke, die im wesentlichen der Höhe des Luftspalts (35) entspricht, ausgebildet ist

13. Verfahren nach einem der Ansprüche 10 bis 12, bei dem die Höhe (38) des Luftspalts (35) bei 5 mm oder weniger, bevorzugt bei weniger als 2 mm liegt.

14. Verfahren nach einem der Ansprüche 10 bis 13, bei dem die Passivierungsmittel (19) zumindest teilweise in Form mindestens einer metallischen Folie (40) ausgebildet sind.

15. Verfahren nach Anspruch 14, bei dem die mindestens eine metallische Folie (40) mit dem Wellmantel (7) oder dem Gehäuse (6) verklebt ist und teilweise mit dem Lotstreifen (15) überlappt.

16. Verfahren nach einem der Ansprüche 14 oder 15, bei dem die mindestens eine metallische Folie (40) dünner als 70 µm, bevorzugt dünner als 50 µm, besonders bevorzugt dünner als 30 µm ausgebildet ist.

17. Verfahren nach einem der vorhergehenden Ansprüche, bei dem der Katalysator-Trägerkörper (1) eine thermische Behandlung erfährt, welche fügetechnische Verbindungen der Lagen (3, 4) untereinander, der Lagen (3, 4) mit dem mindestens einen Wellmantel (7) und/oder dem mindestens einen Wellmantel (7) mit dem Gehäuse (6) zur Folge hat.

18. Katalysator-Trägerkörper (1) umfassend einen Wabenkörper (2), der zumindest teilweise strukturierte Lagen (3, 4) mit Enden (9) hat, welche für ein Fluid durchströmbare Kanäle (5) bilden, ein Gehäuse (6), welches den Wabenkörper (2) zumindest teilweise umgibt, sowie mindestens einen Wellmantel (7), der zwischen dem Wabenkörper (2) und dem Gehäuse (6) angeordnet ist und den Wabenkörper (2) mit dem Gehäuse (6) verbindet, **dadurch gekennzeichnet, dass** mindestens 90%, bevorzugt mindestens 95%, insbesondere mehr als 98% der Enden (9) mit dem mindestens einen Wellmantel (7) fügetechnisch verbunden sind.

19. Katalysator-Trägerkörper (1) nach Anspruch 18, **dadurch gekennzeichnet, dass** die Lagen (3, 4) metallische Glattlagen (4) und Welllagen (3) umfassen, welche bevorzugt abwechselnd zueinander angeordnet und S-förmig und/oderUförmig gebogen sind, so dass alle Enden (9) zumindest teilweise eine äußere Ausdehnung (8) des Wabenkörpers (2) bilden.

20. Katalysator-Trägerkörper (1) nach Anspruch 18 oder 19, **dadurch gekennzeichnet, dass** die Lagen (3, 4) eine Lagendicke (21) kleiner 0,1 mm, insbesondere kleiner 0,05 mm und bevorzugt kleiner 0,02 mm aufweisen.

21. Katalysator-Trägerkörper (1) nach einem der Ansprüche 18 bis 20, **dadurch gekennzeichnet, dass** der Wabenkörper (2), der mindestens eine Wellmantel (7) und das Gehäuse (6) eine zylindrische Form aufweisen.

22. Katalysator-Trägerkörper (1) nach einem der Ansprüche 18 bis 21, **dadurch gekennzeichnet, dass** ein Verbindungsbereich (22) des mindestens einen Wellmantels (7) mit dem Gehäuse (6) flächenmäßig kleiner als ein Anbindungsbereich (23) des mindestens einen Wellmantels (7) mit dem Wabenkörper (2) ist, wobei sich vorzugsweise der Verbindungsbereich (22) und der Anbindungsbereich (23) zumindest teilweise überlagern.

23. Katalysator-Trägerkörper nach Anspruch 22, **dadurch gekennzeichnet, dass** der Verbindungsbereich (22) axial durch einen Luftspalt (35) begrenzt ist.

24. Katalysator-Trägerkörper nach Anspruch 23, **dadurch gekennzeichnet, dass** der Luftspalt (35) durch eine Aussparung (39) im Gehäuse (6) und/oder eine Stufe (36) im Wellmantel (7) und gegebenenfalls Abstandsmittel zwischen Gehäuse (6) und Wellmantel (7) gebildet wird.

25. Katalysator-Trägerkörper (1) nach einem der Ansprüche 18 bis 24, wobei die Lagen (3, 4) eine Lagendicke (21), der mindestens eine Wellmantel (7) eine Manteldicke (24) und das Gehäuse (6) eine Gehäusedicke (25) haben, **dadurch gekennzeichnet, dass** die Manteldicke (24) betragsmäßig zwischen der Lagendicke (21) und der Gehäusedicke (25) liegt, insbesondere in einem Bereich von 0,08 mm bis 0,25 mm.

26. Katalysator-Trägerkörper (1) nach einem der Ansprüche 18 bis 25, **dadurch gekennzeichnet, dass** der Wabenkörper (2) eine Länge (26) in Richtung einer Achse (27) hat, die einer Erstreckung (28) des Wellmantels (7) in Richtung der Achse (27) entspricht.

27. Katalysator-Trägerkörper (1) nach einem der Ansprüche 18 bis 26, **dadurch gekennzeichnet, dass** der mindestens eine Wellmantel (7) eine Strukturlänge (13) und eine Strukturhöhe (14) hat, wobei die Strukturlänge (13) im Bereich von 1,5 mm bis 3,5 mm liegt, und die Strukturhöhe (14) vorzugsweise 0,3 mm bis 1,0 mm beträgt.

## Claims

1. A method for manufacturing a catalyst support body (1) comprising a honeycomb body (2) which has at least partially structured layers (3, 4) which form ducts (5) through which a fluid can flow, a housing (6) which at least partially surrounds the honeycomb body (2), and at least one corrugated casing (7) which is arranged between the honeycomb body (2) and the housing (6) and connects the honeycomb body (2) to the housing (6), which method comprises the following steps:
- manufacture of the honeycomb body (2), wherein it has an external extent (8) which is formed at least partially by ends (9) of the layers (3, 4);
- manufacture of the at least one corrugated casing (7) with a profile (10);
- manufacture of a housing (6) with an internal contour (11);
- insertion of the honeycomb body (2) into the at least one corrugated casing (7);
- insertion of the at least one corrugated casing (7) with the honeycomb body (2) into the housing (6);
- standardization of the housing (6), wherein at least the internal contour (11) and preferably also the profile (10) of the at least one corrugated casing (7) are reduced.

2. The method as claimed in claim 1, in which the profile (10) of the at least one corrugated casing (7) and/or the internal contour (11) of the housing (6) are larger than the external extent (8) of the honeycomb body (2).

3. The method as claimed in claim 2, in which the profile (10) of the at least one corrugated casing (7) and/or the internal contour (11) of the housing (6) is between 0.2 mm and 2 mm larger than the external extent (8) of the honeycomb body (2), in particular between 0.3 mm and 1.2 mm.

4. The method as claimed in claim 2 or 3, in which the at least one corrugated casing (7) has a structure (12) with a structure length (13) and a structure height (14), and the profile (10) of the at least one corrugated casing (7) and/or the internal contour (11) of the housing (6) are larger than the external extent (8) of the honeycomb body (12) by approximately the value of the structure height (13).

5. The method as claimed in one of the preceding claims, in which the honeycomb body (2) is manufactured in such a way that the layers (3, 4) are each alternately built up from a smooth layer (4) and a corrugated layer (3) or from different corrugated layers (3), are then stacked and subsequently bent and/or wound into an S shape and/or U shape so that the ends (9) of the layers (3, 4) at least partially bound the external extent (8) of the honeycomb body (2).

6. The method as claimed in one of the preceding claims, in which, owing to the standardization, the ends (9) of the layers (3, 4) move into engagement with a structure (12) of the at least one corrugated casing (7), in particular come to bear against the at least one corrugated casing (7).

7. The method as claimed in one of the preceding claims, in which the at least one corrugated casing (7) is provided, before the insertion into the housing (6), with at least one solder strip (15) which preferably serves to subsequently couple the at least one corrugated casing (7) to the housing (6).

8. The method as claimed in one of the preceding claims, in which the catalyst support body (1) is provided over at least one end side (16) with a solder (17) which accumulates in regions (18) where the layers (3, 4) are in contact with one another and/or with the at least one corrugated casing (7).

9. The method as claimed in claim 7 or 8, in which passivation means (19) which bound at least one soldering region (20) are provided before the soldering.

10. The method as claimed in claim 9, in which the passivation means (19) are embodied at least partially as an air gap (35).

11. The method as claimed in claim 10, in which the air gap (35) is formed by a recess (39) in the housing (6) and/or a step (36) is formed in the corrugated casing (7) and if appropriate spacer means are formed between the housing (6) and corrugated casing (7).

12. The method as claimed in claim 11, in which a ceramic layer and/or a metal-oxide-containing layer is formed as spacer means on the external surface of the corrugated casing (7) and/or on the internal surface of the housing (6) with a thickness which corresponds essentially to the height of the air gap (35).

13. The method as claimed in one of claims 10 to 12, in which the height (38) of the air gap (35) is 5 mm or less, preferably less than 2 mm.

14. The method as claimed in one of claims 10 to 13, in which the passivation means (19) are embodied at least partially in the form of at least one metallic foil (40).

15. The method as claimed in claim 14, in which the at least one metallic foil (40) is bonded to the corrugated casing (7) or to the housing (6) and partially overlaps the solder strip (15).

16. The method as claimed in one of claims 14 or 15, in which the at least one metallic foil (40) is made thinner than 70 µm, preferably thinner than 50 µm, in particular preferably thinner than 30 µm.

17. The method as claimed in one of the preceding claims, in which the catalyst support body (1) undergoes thermal treatment which results in the layers (3, 4) being connected to one another, the layers (3, 4) being connected to the at least one corrugated casing (7) and/or the at least one corrugated casing (7) being connected to the housing (6) by means of a joining technique.

18. A catalyst support body (1) comprising a honeycomb body (2) which has at least partially structured layers (3, 4) with ends (9) which form ducts (5) through which a fluid can flow, a housing (6) which at least partially surrounds the honeycomb body (2) and at least one corrugated casing (7) which is arranged between the honeycomb body (2) and the housing (6) and connects the honeycomb body (2) to the housing (6), **characterized in that** at least 90%, preferably at least 95%, in particular more than 98% of the ends (9) are connected to the at least one corrugated casing (7) by a joining technique.

19. The catalyst support body (1) as claimed in claim 18, **characterized in that** the layers (3, 4) comprise metallic smooth layers (4) and corrugated layers (3) which are preferably arranged alternately and are bent in an S shape and/or U shape so that all the ends (9) form at least partially an external extent (8) of the honeycomb body (2).

20. The catalyst support body (1) as claimed in claim 18 or 19, **characterized in that** the layers (3, 4) have a layer thickness (21) of less than 0.1 mm, in particular less than 0.05 mm and preferably less than 0.02 mm.

21. The catalyst support body (1) as claimed in one of claims 18 to 20, **characterized in that** the honeycomb body (2), the at least one corrugated casing (7) and the housing (6) have a cylindrical shape.

22. The catalyst support body (1) as claimed in one of claims 18 to 21, **characterized in that** a coupling region (22) of the at least one corrugated casing (7) to the housing (6) is smaller in area than a coupling region (23) of the at least one corrugated casing (7) to the honeycomb body (2), the connecting region (22) and the coupling region (23) preferably at least partially overlapping.

23. The catalyst support body as claimed in claim 22, **characterized in that** the connecting region (22) is bounded axially by an air gap (35).

24. The catalyst support body as claimed in claim 23, **characterized in that** the air gap (35) is formed by a recess (39) in the housing (6) and/or a step (36) in the corrugated casing (7) and, if appropriate, spacer means between the housing (6) and corrugated casing (7).

25. The catalyst support body (1) as claimed in one of claims 18 to 24, wherein the layers (3, 4) have a layer thickness (21), the at least one corrugated casing (7) has a casing thickness (24) and the housing (6) has a housing thickness (25), **characterized in that** the casing thickness (24) lies, in terms of size, between the layer thickness (21) and the housing thickness (25), in particular in a range from 0.08 mm to 0.25 mm.

26. The catalyst support body (1) as claimed in one of claims 18 to 25, **characterized in that** the honeycomb body (2) has a length (26) in the direction of an axis (27) which corresponds to an extent (28) of the corrugated casing (7) in the direction of the axis (27).

27. The catalyst support body (1) as claimed in one of claims 18 to 26, **characterized in that** the at least one corrugated casing (7) has a structure length (13) and a structure height (14), wherein the structure length (13) lies in the range from 1.5 mm to 3.5 mm, and the structure height (14) is preferably 0.3 mm to 1.0 mm.

## Revendications

1. Procédé pour fabriquer un corps support de catalyseur (1), comportant un corps en nids d'abeilles (2) qui a des couches (3,4) au moins partiellement structurées, qui forment des canaux (5) pouvant être traversés par un fluide, un boîtier (6) qui entoure au moins partiellement le corps en nids d'abeilles (2), ainsi qu'au moins une enveloppe ondulée (7) qui est agencée entre le corps en nids d'abeilles (2) et le boîtier (6) et qui relie le corps en nids d'abeilles (2) au boîtier (6), procédé comportant les étapes suivantes :
- Fabrication du corps en nids d'abeilles (2), dans quel cas celui-ci a une étendue extérieure (8) qui est formée au moins partiellement par des extrémités (9) des couches (3, 4) ;
- fabrication de l'au moins une enveloppe ondulée (7) avec un profil (10) ;
- fabrication d'un boîtier (6) avec un contour intérieur (11) ;
- introduction du corps en nids d'abeilles (2) dans l'au moins une enveloppe ondulée (7) ;
- introduction de l'au moins une enveloppe ondulée (7) avec le corps en nids d'abeilles (2) dans le boîtier (6) ;
- calibrage du boîtier (6), dans quel cas au moins le contour intérieur (11) et de préférence aussi le profil (10) de l'au moins une enveloppe ondulée (7) sont réduits.

2. Procédé selon la revendication 1, dans lequel le profil (10) de l'au moins une enveloppe ondulée (7) et/ou le contour intérieur (11) du boîtier (6) est plus grand que l'étendue extérieure (8) du corps en nids d'abeilles (2).

3. Procédé selon la revendication 2, dans lequel le profil (10) de l'au moins une enveloppe ondulée (7) et/ou le contour intérieur (11) du boîtier (6) est entre 0,2 mm et 2 mm plus grand que l'étendue extérieure (8) du corps en nids d'abeilles (2), notamment entre 0,3 mm et 1,2 mm.

4. Procédé selon la revendication 2 ou 3, dans lequel l'au moins une enveloppe ondulée (7) a une structure (12) avec une longueur de structure (13) et une hauteur de structure (14) et le profil (10) de l'au moins une enveloppe ondulée (7) et/ou le contour intérieur (11) du boîtier (6) est plus grand d'environ le montant de la hauteur de structure (13) que l'étendue extérieure (8) du corps en nids d'abeilles (2).

5. Procédé selon l'une des revendications précédentes, dans lequel la fabrication du corps en nids d'abeilles (2) est effectuée de manière telle que les couches (3, 4) sont construites en alternance à partir de respectivement une couche lisse (4) et une couche ondulée (3) ou à partir de couches ondulées (3) différentes, ensuite empilées et puis courbées en forme de S et/ou en forme de U et/ou enroulées, de sorte que les extrémités (9) des couches (3, 4) limitent au moins partiellement l'étendue extérieure (8) du corps en nids d'abeilles (2).

6. Procédé selon l'une des revendications précédentes, dans lequel dû au calibrage les extrémités (9) des couches (3, 4) s'engagent avec une structure (12) de l'au moins une enveloppe ondulée (7), s'appliquent notamment contre l'au moins une enveloppe ondulée (7).

7. Procédé selon l'une des revendications précédentes, dans lequel avant d'être intégrée dans le boîtier (6) l'au moins une enveloppe ondulée (7) est pourvue d'au moins un ruban de matériau de brasure (15) qui sert de préférence de raccord ultérieur de l'au moins une enveloppe ondulée (7) au boîtier (6).

8. Procédé selon l'une des revendications précédentes, dans lequel le corps support de catalyseur (1) est pourvu d'un agent à braser (17) sur au moins une face frontale (16), lequel se dépose dans des régions de contact (18) des couches (3, 4) entre elles et/ou avec l'au moins une enveloppe ondulée (7).

9. Procédé selon la revendication 7 ou 8, dans lequel avant le garnissage avec de la brasure on prévoit des moyens de passivation (19) qui limitent au moins une région de brasure (20).

10. Procédé selon la revendication 9, dans lequel les moyens de passivation (19) sont réalisés au moins partiellement comme un entrefer (35).

11. Procédé selon la revendication 10, dans lequel l'entrefer (35) est formé par un évidement (39) dans le boîtier (6) et/ou par une marche (36) dans l'enveloppe ondulée (7) et le cas échéant par des moyens écarteurs entre le boîtier (6) et l'enveloppe ondulée (7).

12. Procédé selon la revendication 11, dans lequel en tant que moyens écarteurs on réalise une couche céramique et/ou une couche contenant de l'oxyde métallique sur la surface extérieure de l'enveloppe ondulée (7) et/ou sur la surface intérieure du boîtier (6) avec une épaisseur qui correspond sensiblement à la hauteur de l'entrefer (35).

13. Procédé selon l'une des revendications 10 à 12, dans lequel la hauteur (38) de l'entrefer (35) se trouve près de 5 mm ou moins, de préférence près de moins que 2 mm.

14. Procédé selon l'une des revendications 10 à 13, dans lequel les moyens de passivation (19) sont réalisés au moins partiellement en forme d'au moins une feuille métallique (40).

15. Procédé selon la revendication 14, dans lequel l'au moins une feuille métallique (40) est collée à l'enveloppe ondulée (7) ou au boîtier (6) et recouvre partiellement le ruban de matériau de brasure (15).

16. Procédé selon l'une des revendications 14 ou 15, dans lequel l'au moins une feuille métallique (40) est réalisée de manière plus mince que 70 µm, de préférence plus mince que 50 µm, particulièrement préféré plus mince que 30 µm.

17. Procédé selon l'une des revendications précédentes, dans lequel le corps support de catalyseur (1) est soumis à un traitement thermique, qui a pour conséquence des liaisons par technique de jointoiement des couches (3, 4) entre elles, des couches (3, 4) avec l'au moins une enveloppe ondulée (7) et/ou l'au moins une enveloppe ondulée (7) avec le boîtier (6).

18. Corps support de catalyseur (1) comportant un corps en nids d'abeilles (2) qui a des couches (3,4) au moins partiellement structurées avec des extrémités (9) qui forment des canaux (5) pouvant être traversés par un fluide, un boîtier (6) qui entoure au moins partiellement le corps en nids d'abeilles (2), ainsi qu'au moins une enveloppe ondulée (7) qui est agencée entre le corps en nids d'abeilles (2) et le boîtier(6) et qui relie le corps en nids d'abeilles (2) au boîtier (6), **caractérisé en ce qu'**au moins 90 %, de préférence au moins 95 %, notamment plus de 98 % des extrémités (9) sont reliées à l'au moins une enveloppe ondulée (7) par technique de jointoiement.

19. Corps support de catalyseur (1) selon la revendication 18, **caractérisé en ce que** les couches (3, 4) comportent des couches métalliques lisses (4) et des couches ondulées (3) qui de préférence sont agencées en alternance les unes par rapport aux autres et qui sont courbées en forme de S et/ou en forme de U, de sorte que toutes les extrémités (9) forment au moins partiellement une étendue extérieure (8) du corps en nids d'abeilles (2).

20. Corps support de catalyseur (1) selon la revendication 18 ou 19, **caractérisé en ce que** les couches (3, 4) ont une épaisseur de couche (21) plus mince que 0,1 mm, notamment plus mince que 0,05 mm et de préférence plus mince que 0,02 mm.

21. Corps support de catalyseur (1) selon l'une des revendications 18 à 20, **caractérisé en ce que** le corps en nids d'abeilles (2), l'au moins une enveloppe ondulée (7) et le boîtier (6) ont une forme cylindrique.

22. Corps support de catalyseur (1) selon l'une des revendications 18 à 21, **caractérisé en ce qu'**une région de liaison (22) de l'au moins une enveloppe ondulée (7) avec le boîtier (6) est quant à la surface plus petite qu'une région de raccord (23) de l'au moins une enveloppe ondulée (7) avec le corps en nids d'abeilles (2), dans quel cas la région de liaison (22) et la région de raccord (23) sont au moins partiellement superposées.

23. Corps support de catalyseur (1) selon la revendication 22, **caractérisé en ce que** la région de liaison (22) est limitée axialement par un entrefer (35).

24. Corps support de catalyseur (1) selon la revendication 23, **caractérisé en ce que** l'entrefer (35) est formé par un évidement (39) dans le boîtier (6) et/ou une marche (36) dans l'enveloppe ondulée (7) et le cas échéant par des moyens écarteurs entre le boîtier (6) et l'enveloppe ondulée (7).

25. Corps support de catalyseur (1) selon l'une des revendications 18 à 24, dans quel cas les couches (3, 4) ont une épaisseur de couche (21), l'au moins une enveloppe ondulée (7) une épaisseur d'enveloppe (24) et le boîtier (6) une épaisseur de boîtier (25), **caractérisé en ce que** l'épaisseur d'enveloppe (24) se trouve quant au montant entre l'épaisseur de couche (21) et l'épaisseur du boîtier (25), notamment dans une région de 0,08 mm à 0,25 mm.

26. Corps support de catalyseur (1) selon l'une des revendications 18 à 25, **caractérisé en ce que** le corps en nids d'abeilles (2) a une longueur (26) en direction d'un axe (27) qui correspond à une étendue (28) de l'enveloppe ondulée (7) en direction de l'axe (27).

27. Corps support de catalyseur (1) selon l'une des revendications 18 à 26, **caractérisé en ce que** l'au moins une enveloppe ondulée (7) a une longueur de structure (13) et une hauteur de structure (14), dans quel cas la longueur de structure (13) se trouve dans la région de 1,5 mm à 3,5 mm et la hauteur de structure (14) comporte de préférence 0,3 mm à 1,0 mm.
